# EUROPEAN PATENT APPLICATION

(11) **EP 4 414 825 A1**
(43) Date of publication of application: **14.08.2024**
(21) Application number: 23796574.4
(22) Date of filing: 09.01.2023
(51) Int. Cl.: G06F 3/14, G06F 13/38

(54) **ELECTRONIC DEVICE FOR MULTI-DISPLAY CONTROL**

(30) Priority: 29.04.2022 KR 20220053789
(71) Applicant: Samsung Electronics Co., Ltd., Suwon-si, Gyeonggi-do 16677 (KR)
(72) Inventor: KIM, Hyunseok, Suwon-si, Gyeonggi-do 16677 (KR); PARK,Jeongkee, Suwon-si, Gyeonggi-do 16677 (KR)
(74) Representative: Appleyard Lees IP LLP
(86) International application number: PCT/KR2023/000390
(87) International publication number: WO 2023/210920

(57) **Abstract**

An electronic device is disclosed. The electronic device includes a first communication connector connected to a first external device, a second communication connector connected to a second external device, a processor, and a control circuit electrically connected to the processor, the first communication connector, and the second communication connector, the control circuit including a first path, a second path and a third path. The processor is configured to identify an operating mode of the electronic device, and based on the identified operating mode of the electronic device, select at least one of the first path connecting the first communication connector and the second communication connector, the second path connecting the first communication connector and the processor, and the third path connecting the processor and the second communication connector.

## Description

### [TECHNICAL FIELD]

Various embodiments of the present disclosure relate to an electronic device for multi-display control.

### [BACKGROUND ART]

A display device is a device that processes an image signal/image data input from the outside or stored therein by various processes to display the processed signal/data as an image on a display panel or screen, and may be implemented in various ways such as e.g., a television, a monitor, a portable media player or the like according to its method of use.

In this context, digital information display (DID) may refer to a display product for posting public information, and a large scale of DID system may be installed in a public place to provide advertisements and promotional images of certain business or products to an unspecified number of people. A large format display (LFD), which is an example of a DID system, has a size larger than a common display, and is mainly used to play advertisement contents. The LFD may serve to output external inputs such as PC, HDMI, DVI, DP, AV, Component, etc. and TV signals. The LFD may be implemented as a standalone using a single display device or as a video wall in which a plurality of display devices are connected. In case such a video wall is configured with a plurality of display devices, each display device may display a split image corresponding to itself among the received video wall images.

In a multi-display system in which a plurality of display devices are connected, each display device may be controlled through a PC. Specifically, the plurality of display devices may be connected to the PC in a daisy chain method or in a one-to-one individual connection method. The plurality of display devices may receive a control command from the PC and perform an operation corresponding to the received control command.

For connection between display devices of a multi-display system, the display devices may be connected to each other so that their operations may be controlled via a plurality of general purpose inputs/outputs (GPIOs), a plurality of multiplexers, and a plurality of universal asynchronous receivers/transmitters (UARTs).

### [TECHNICAL PROBLEM]

The present disclosure discloses a structure of an electronic device for simplifying a control circuit of a display device for configuring a multi-display system.

Further, the present disclosure discloses a structure of an electronic device for unifying a circuit using each UART terminal for each function (e.g., debugging, STANDBY WAKE, STANBY UART, MDC, etc.) into one UART port.

Furthermore, the present disclosure discloses an apparatus and method for controlling a flow of signals by differently controlling a switch according to an operating mode of an electronic device.

### [TECHNICAL SOLUTION]

According to an embodiment of the present disclosure, an electronic device may include a first communication connector connectable to a first external device, a second communication connector connectable to a second external device, a processor, and a control circuit electrically connected to the processor, the first communication connector, and the second communication connector, the control circuit including a first path connecting the first communication connector and the second communication connector, a second path connecting the first communication connector and the processor, and a third path connecting the processor and the second communication connector, wherein the processor is configured to identify an operating mode of the electronic device, and based on the identified operating mode of the electronic device, select at least one of the first path, the second path, and the third path.

According to an embodiment of the present disclosure, an operating method of an electronic device may include, by the electronic device, receiving information on an operating mode of the electronic device from a first external device, identifying the operating mode of the electronic device based on the information on the operating mode, and based on the identified operating mode, transmitting to a second external device at least one of a first signal received from the first external device and a second signal generated by the electronic device.

According to an embodiment of the present disclosure, an electronic device may include a transceiver, a display, a processor and a memory storing instructions to cause the processor to identify that a first display device and at least one second display device are connected to the electronic device, display a user interface on the display to control the first display device and the at least one second display device, identify an operating mode of the first display device and an operating mode of the at least one second display device, based on a user's selection through the user interface, generate a signal including information on the identified operating mode of the first display device and the identified operating mode of the at least one second display device, and transmit the generated signal to the first display device via the transceiver.

### [ADVANTAGEOUS EFFECTS]

According to various embodiments of the present disclosure, an electronic device can provide a connection with another display device through a control circuit having a relatively simpler structure.

Further, according to various embodiments of the present disclosure, an electronic device can control flow of signals according to an operating mode of the electronic device so as to control the electronic device with a small number of multiplexers and universal asynchronous receiver/transmitters (UARTs).

Moreover, according to various embodiments of the present disclosure, an electronic device can optimize the type, number, and/or circuit configuration of circuit components required for connection of a multi-display system, thereby reducing the complexity of circuitry and its functional waste so as to lower its manufacturing cost.

Effects that can be obtained in the exemplary embodiments of the present disclosure are not limited to those described above, and any other effects not mentioned herein will be clearly derived and understood by those having ordinary knowledge in the technical field to which the exemplary embodiments of the present disclosure belong from the description below. That is to say, unintended effects of carrying out the exemplary embodiments of the present disclosure will be also clearly derived by those of ordinary skill in the art from the exemplary embodiments of the present disclosure.

### [BRIEF DESCRIPTION OF THE DRAWINGS]

FIG. 1 illustrates an example of a connection between electronic devices in a multi-display system according to an embodiment;
FIG. 2 illustrates an example of a block configuration of an electronic device according to an embodiment;
FIG. 3 illustrates an example of an internal circuit connection of an electronic device according to an embodiment;
FIG. 4 illustrates an operational flow of an electronic device according to an embodiment;
FIG. 5A illustrates a signal flow in a first operating mode of an electronic device according to an embodiment;
FIG. 5B illustrates an example of switch control in a first operating mode of an electronic device according to an embodiment;
FIG. 6A illustrates a signal flow in a second operating mode of an electronic device according to an embodiment;
FIG. 6B illustrates an example of switch control in a second operating mode of an electronic device according to an embodiment;
FIG. 7A illustrates a signal flow in a third operating mode of an electronic device according to an embodiment;
FIG. 7B illustrates an example of switch control in a third operating mode of an electronic device according to an embodiment;
FIG. 8 illustrates an example of a connection between display devices according to an embodiment;
FIG. 9 illustrates another example of a connection between display devices according to an embodiment;
FIG. 10 illustrates still another example of a connection between display devices according to an embodiment;
FIG. 11 illustrates an operational flow of an electronic device according to an embodiment;
FIG. 12 illustrates an example of a user interface displayed on an electronic device according to an embodiment; and
FIG. 13 illustrates an example of a user interface displayed on an electronic device according to an embodiment.

### [DETAILED DESCRIPTION]

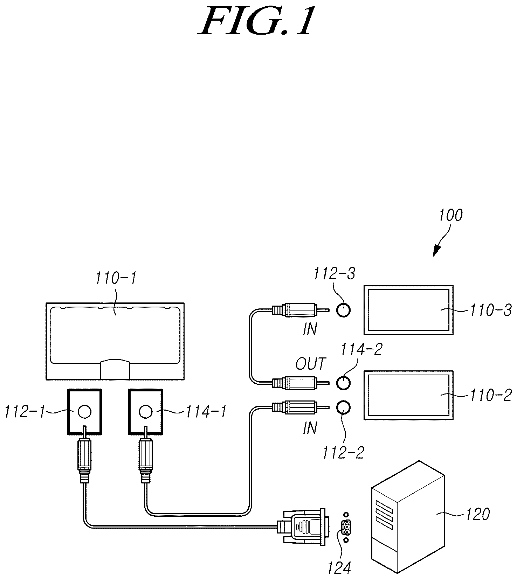

Hereinafter, with reference to the drawings, various embodiments of the present disclosure will be described in detail so that those having ordinary knowledge in the technical field to which the disclosure pertains can easily implement the same. However, the present disclosure may be implemented in several different forms and is not limited to the embodiments described herein. In conjunction with the description of the drawings, like or similar reference numerals may be used for like or similar components. Further, in the drawings and their related descriptions, descriptions of well-known functions and configurations may be omitted for clarity and conciseness. FIG. 1 illustrates an example of a multi-display system according to an embodiment.

Referring to FIG. 1, a multi-display system 100 may include a plurality of display devices (e.g., a first display device 110-1, a second display device 110-2, and a third display device 110-3) and a host device 120. Although three display devices are illustrated in the drawing, this is only of an example, and the multi-display system 100 may include more or fewer than three display devices.

In the following description, the plurality of display devices are respectively divided into the first display device 110-1, the second display device 110-2, and the third display device 110-3 according to their connection order, but they are divided only for convenience of explanation. Thus, the first display device 110-1, the second display device 110-2, and the third display device 110-3 may all be devices having the same or corresponding input/output unit.

According to an embodiment, each of the plurality of display devices (e.g., the first display device 110-1, the second display device 110-2, and the third display device 110-3) may mean a device for receiving an external input, a TV signal or the like to display on a screen. For example, the plurality of display devices may be any one of a TV, a monitor, and a portable media player.

According to an embodiment, the host device 120 may a device that transmits an image signal or an input signal to the plurality of display devices, including at least one of various connection interfaces, in an unlimited scheme, such as e.g., a High Definition Multimedia Interface (HDMI), a Digital Visual Interface (DVI), or a Display Port (DP), an AV adapter, Component or the like.

According to an embodiment, each of the plurality of display devices 110 may include a communication connector (e.g., an input unit 112, an output unit 114, etc.) for performing communication with other electronic devices (e.g., a host device, another display device). The input unit 112 may refer to a communication connector connected to an output unit of another electronic device that is connected earlier in the connection order. The output unit 114 may refer to a communication connector connected to an input unit of another device connected later in the connection order. For example, the second display device 110-2 may include an input unit 112-2 connected to the output unit 114-1 of the first display device 110-1 connected earlier in the connection order and an output unit 114-1 connected to the input unit 112-3 of the third display device connected later in the connection order. In the following description, the input unit may be referred to as a "first communication connector" and the output unit may also be referred to as a "second communication connector", wherein the input unit and the output unit may be configured to perform bidirectional communication, respectively. For example, the input unit and the output unit may be implemented as a universal asynchronous receiver/transmitter (UART).

According to an embodiment, the connection of the multi-display system 100 may be implemented in the order of the host device 120-the first display device 110-1-the second display device 110-2-the third display device 110-3. For example, the output unit 124 of the host device 120 and the input unit 112-1 of the first display device 110-1 may be connected to each other, the output unit 114-1 of the first display device 110-1 and the input unit 112-2 of the second display device 110-2 may be connected to each other, and the output unit 114-2 of the second display device 110-2 and the input unit 112-3 of the third display device 110-3 may be connected to each other. FIG. 1 shows a structure in which the host device 120, the first display device 110-1, the second display device 110-2, and the third display device 110-3 are connected in sequence, but this is only of an example, and the host device 120 and the plurality of display devices may be connected in a different order.

Although not shown in the drawings, the multi-display system 100 may include a hub (e.g., a LAN, an external modem, an IP sharer) connected between the host device 120 and a plurality of display devices. When the multi-display system 100 includes the hub, the plurality of display devices may be interconnected through a LAN terminal provided in the hub.

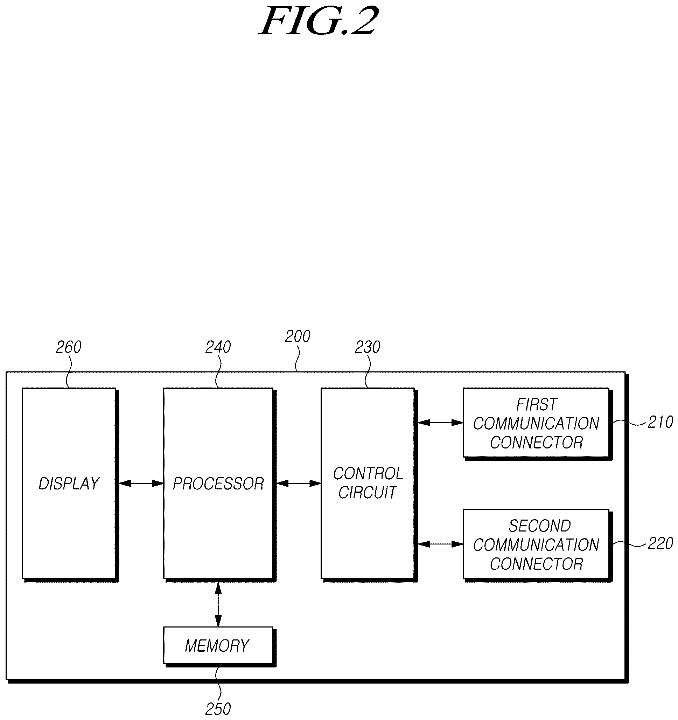

FIG. 2 illustrates a block diagram of an example configuration of an electronic device according to an embodiment.

An electronic device 200 shown in FIG. 2 may be a display device corresponding to any one of the plurality of display devices of FIG. 1. The block configuration of the electronic device 200 of FIG. 2 illustrates only a configuration for connection of the multi-display system 100, and the electronic device 200 may include other configurations for performing the function of the display device, e.g., such as a display driver circuit, a display panel, a main processor, a battery, or the like.

Referring to FIG. 2, the electronic device 200 may include a first communication connector 210 (e.g., the input unit 112), a second communication connector 220 (e.g., the output unit 114), a controller 230, a processor 240, a memory 250, and a display 260.

According to an embodiment, the electronic device 200 may be connected to an output unit of another external device connected earlier in the connection order to the electronic device 200 via the first communication connector 210. Further, the electronic device 200 may be connected to an input unit of another external device connected later in the connection order to the electronic device 200 via the second communication connector 220. For example, the second display device 110-2 may be connected to the output unit 114-1 of the first display device 110-1 via the first communication connector 112-2. Further, the second display device 110-2 may be connected to the input unit 112-3 of the third display device 110-3 via the second communication connector 114-2. In the following description, another external device connected before the electronic device 200 may be referred to as a "first external device", and another external device connected after the electronic device 200 may be referred to as a "second external device".

According to an embodiment, the first communication connector 210 and the second communication connector 220 may include a universal asynchronous receiver/transmitter (UART). The electronic device 200 may receive a first signal from the first external device through the first communication connector 210 (UART_IN). The electronic device 200 may transmit the first signal to the second external device through the second communication connector 220 (UART_OUT). Although not shown in the drawing, the first communication connector 210 and the second communication connector 220 may include a transmission line (Tx_line) and a reception line (Rx_line), respectively, for performing bidirectional communication in addition to reception of the first signal and transmission of the second signal.

According to an embodiment, the control circuit 230 may imply a signal transmission path between the first communication connector 210, the second communication connector 220, and the processor 240. The control circuit 230 may include a switch, an AND gate 236, the first communication connector 210, the second communication connector 220, and a terminal for connecting with the processor 240.

According to an embodiment, the control circuit 230 may include a first path connecting the first communication connector 210 and the second communication connector 220. According to an embodiment, the control circuit 230 may include a second path connecting the first communication connector 210 and the processor 240. According to an embodiment, the control circuit 230 may include a third path connecting the processor 240 and the second communication connector 220.

Although not shown in the drawings, the electronic device 200 may include a switch control circuit (not shown) for controlling a switch disposed in the control circuit 230. The switch control circuit may be connected to the processor 240.

Although not shown in the drawings, the electronic device 200 may include a circuit (not shown) for receiving information about an operating mode from the first external device in order to identify the operating mode of the electronic device 200.

According to an embodiment, the electronic device 200 may receive information about the operating mode of the electronic device 200 through the circuit for receiving information about the operating mode from the first external device. Alternatively, in the electronic device 200, a first signal received from the first communication connector 210 may include information on the operating mode of the electronic device 200. The electronic device 200 may transmit a second signal including information on the operating mode of the second external electronic device to the second external device via the second communication connector 220.

According to an embodiment, the processor 240 may generate the second signal based on the first signal. For example, the second signal may be generated based on information about the operating mode of the electronic device included in the first signal. Further, for example, the second signal including identifier information of the second external device may be generated based on identifier information of the electronic device included in the first signal. Further, for example, the second signal may be generated based on display information included in the first signal.

According to an embodiment, the processor 240 may control the operation of the electronic device 200 based on information about the operating mode of the electronic device 200 received from the first external device. For example, the electronic device 200 may transmit the first signal received from the first communication connector 210 to the second communication connector 220.

According to an embodiment, the processor 240 may receive the first signal received from the first processor 242 and the first communication connector 210 to generate a control signal for controlling the switch disposed in the control circuit 230 signal. Although not shown in the drawings, the processor 240 may include a constant power unit that operates to maintain an always-on state even when a main power of the electronic device 200 is OFF, and a power operation module that operates when the main power is ON.

According to an embodiment, the memory 250 may store the first signal received from the first communication connector 210 and information generated by the processor 240 based thereon.

According to an embodiment, the memory 250 may provide the stored information to the processor 240.

According to an embodiment, the processor 240 may output an image to the display 260 after performing image/audio signal processing.

According to an embodiment, the display 260 may output data received from an external input (e.g., the host device 120).

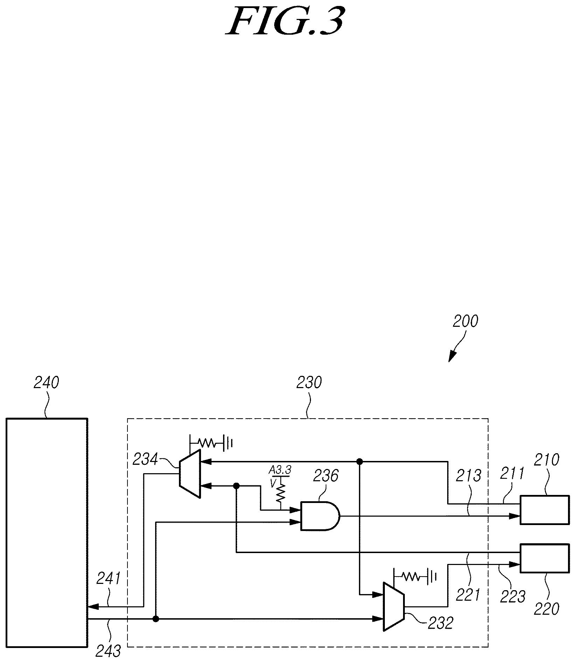

FIG. 3 illustrates an example of internal connection of an electronic device 200 according to an embodiment.

Referring to FIG. 3, the electronic device 200 may include a first communication connector 210, a second communication connector 220, a control circuit 230, and a processor 240.

According to an embodiment, the electronic device 200 may perform bidirectional communication with the first external device and the second external device via the first communication connector 210 and the second communication connector 220. The first communication connector 210 and the second communication connector 220 may include a UART.

According to an embodiment, the electronic device 200 may receive a first signal from the first external device through the first communication connector 210 (UART_IN), and transmit the first signal or the second signal to the second external device through the second communication connector 220 (UART_OUT). The first communication connector 210 may operate as an input unit and the second communication connector 220 may operate as an output unit, and the electronic device 200 may transmit a signal to the first external device through the first communication connector 210 and receive a signal from the second external device through the second communication connector 220.

According to an embodiment, the electronic device 200 may receive the first signal through the first communication connector 210, and the received first signal may pass through the first switch 232 to be transmitted to the second communication connector 220. In such a case, the first signal may pass through a reception line 211 and a transmission line 223.

According to an embodiment, the electronic device 200 may receive a first signal through the first communication connector, and the received first signal may be transmitted to the processor 240 through a second switch. In this case, the first signal may pass through the reception line 211 and the reception line 241.

According to an embodiment, the electronic device 200 may generate a second signal in the processor 240, and the generated second signal may pass through an AND gate 236 to be transmitted to the first communication connector 210. In such a case, the second signal may pass through the transmission line 243 and the transmission line 213.

According to an embodiment, the electronic device 200 may generate a second signal in the processor 240, and the generated second signal may pass through the second switch 234 to be transmitted to the second communication connector 220. At this time, the second signal may pass through the transmission line 243 and the transmission line 223.

According to an embodiment, the first signal may include information indicating the operating mode of the electronic device 200 (e.g., daisy chain mode, automatic ID setting mode, LAN master mode), information for controlling a switch according to the operating mode (e.g., switch control signals (L, H)), information about screen settings (e.g., contrast, brightness, sharpness, size, position, resolution, video wall, stereoscopic image settings), sound information, identification information (e.g., ID, ID range, assigned port information), and information on other connected external device.

According to an embodiment, the second signal may include information indicating whether the electronic device 200 has successfully received the first signal (e.g., ACK/NACK), information about the electronic device 200 (for example, identifier, address (e.g., MAC address), port, connection status, connection type (e.g., RS232CMDC, RJ45MDC, Ethernet)), and information (e.g., connection state, ON/OFF, identifier, operating mode, or the like of an external device) on any external device (e.g., the first external device and the second external device) connected to the electronic device 200.

According to an embodiment, the control circuit 230 may include a first switch 232, a second switch 234, and an AND gate 236. The first switch 232 and the second switch 234 may be implemented as general-purpose input/output (GPIO).

According to an embodiment, the electronic device 200 may include a switch control circuit (not shown) for controlling inputs and outputs of the first switch 232 and the second switch 234.

According to an embodiment, the processor 240 may control the first switch 232 and the second switch 234 so that the first switch 232 and the second switch 234 can output any one signal selected from among one or more signals input thereto, respectively.

According to an embodiment, the processor 240 may transmit a control signal (e.g., a first control signal (L), a second control signal (H)) to the first switch 232 and the second switch 234, respectively, through a switch control circuit (not shown), to control the input and the output of the first switch 232 and the second switch 234. For example, the processor 240 may transmit the first control signal L to the first switch 232 and the second switch 234, respectively, and accordingly, the first switch 232 and the second switch 234 234) may select and output a first signal of one or more signals input thereto. Further, for example, the processor 240 may transmit the second control signal H to the first switch 232 and transmit the first control signal L to the second switch 234, and accordingly, the first switch 232 may select and output the first signal from among one or more signals input to the first switch 232, and the second switch 234 may select and output a first signal from among one or more signals input to the second switch 234. Further, for example, the processor 240 may transmit the second control signal H to the first switch 232 and the second switch 234, and accordingly, the first switch 232 and the second switch 234 may select and output a second signal from among one or more signals input to the first switch 232 and the second switch 234.

According to an embodiment, the signal input to the first switch 232 may include a first signal received through the reception line 211 from the first communication connector 210 and a second signal the processor 240 transmits via the transmission line 243.

According to an embodiment, the signal input to the second switch 234 is a first signal received through the reception line 211 from the first communication connector 210 and a signal received through the reception line 221 from the second communication connector 220.

According to an embodiment, the electronic device may transmit a signal to the first external device through the AND gate 236. For example, the electronic device 200 may transmit a signal received from the second external device through the second communication connector 220 and a signal received from the processor 240, through the AND gate 236 to the first communication connector 210.

According to an embodiment, the signal input to the AND gate 236 may include a signal received through the reception line 221 from the second communication connector 220 and a signal transmitted by the processor 240 via the transmission line 243.

According to an embodiment, when the electronic device 200 is a display device connected at the end of the multi-display system 100, a pull-up voltage (e.g., 3.3V) may be set to the AND gate 236 to transmit a signal received from the second communication connector 220 to the first communication connector 210.

According to an embodiment, the signal input to the processor 240 include either one of a signal received through the reception line 211 from the first communication connector 210 or a signal received through the reception line 221 of the second communication connector 220.

According to an embodiment, the processor 240 may control the first switch 232 and the second switch 234 according to the operating mode of the electronic device 200. For example, in case where the operating mode of the electronic device 200 is in a daisy chain mode, the processor 240 may control both the first switch 232 and the second switch 234 to output the first signal. Further, for example, in case where the operating mode of the electronic device 200 is an Auto-set ID mode, the processor 240 may control to the first switch 232 to select and output the first signal and the second switch 234 to select and output the second signal. Further, for example, in case where operating mode of the electronic device 200 is a LAN master mode, the processor 240 may control both the first switch 232 and the second switch 234 to select and output the second signal.

According to an embodiment, although not shown in the drawings, when the electronic device 200 is in the first state, the processor 240 may control the control circuit 230, the first communication connector 210 and the second communication connector 220 via an operating power supply (not shown) and a constant power supply unit (not shown). The first state may refer to a state that the electronic device 200 is in a wake up a state or the power is turned ON.

According to an embodiment, when the electronic device 200 is in the second state, the processor 240 may control the control circuit 230, the first communication connector 210, and the second communication connector 220 via the constant power supply (not shown). The second state may refer to a state that the electronic device 200 is in a sleep state or the power is turned OFF.

According to an embodiment, information processed by the constant power supply (not shown) in the second state may be stored in the memory 250.

According to an embodiment, the information processed by the constant power supply (not shown) in the second state may be transmitted to the operating power supply (not shown) after the state of the electronic device 200 is switched from the second state to the first state.

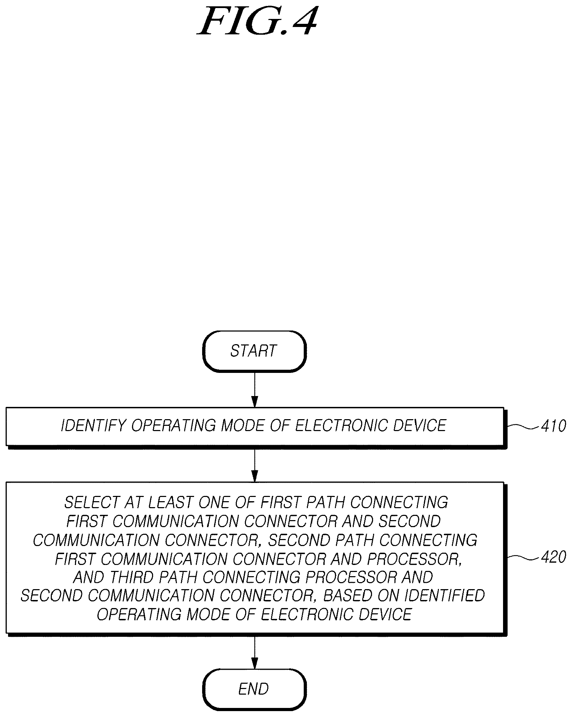

FIG. 4 illustrates a flowchart of the operation of an electronic device according to an embodiment.

The electronic device described in FIG. 4 may include the display device 110 of FIG. 1 and the electronic device corresponding to the electronic device 200 of FIGS. 2 and 3. The first external device may include a display device or a host device connected prior to the electronic device, and the second external device may include a display device connected subsequent to the electronic device.

According to an embodiment, in operation 410, the electronic device may identify an operating mode of the electronic device.

According to an embodiment, the electronic device may identify the operating mode of the electronic device based on the operating mode information received from the first external device. The operating mode information may include information indicating an operating mode of the electronic device. The operating mode information may be generated in the host device and transmitted to a display device connected to the host device. The electronic device may receive the operating mode information through the host device or at least one display device connected between the electronic device and the host device.

According to an embodiment, the operating mode information may be determined based on identifying a user input for selecting an operating mode in the host device. For example, the operating mode of the electronic device may be determined with a user input received through an MDC user interface displayed on the host device.

According to an embodiment, the operating mode may be any one of a daisy chain mode, an automatic ID setting mode, or a LAN master mode.

The daisy chain mode may refer to a mode in which all devices included in a multi-display system (e.g., the multi-display system 100) are continuously connected and operated in sequence. Information generated from a host device located at the front end may be sequentially transmitted to each of the display devices through continuously connected display devices. The daisy chain mode may be a basic operating mode of the electronic devices. The daisy chain mode may include a standby state to complete the setting when the MDC setting has been not yet completed. The automatic ID setting mode may be a mode for allocating SET IDs to all the display devices connected in the daisy chain mode, wherein IDs may be sequentially assigned from 1 to N to each of the display devices connected in the daisy chain mode. When all the IDs are assigned, ID may be designated as 0. In the automatic ID setting mode, a range of IDs set in each display device may be determined by a user's input. The LAN master mode may refer to a mode in which an electronic device directly transmits a command to a next external device, rather than transmitting a signal received from its earlier connected external device to the next external device.

According to an embodiment, in the daisy chain mode, the electronic device may receive a first signal received from a first external device and the processor may perform an operation for MDC based on information included in the first signal.

According to an embodiment, in the daisy chain mode, the electronic device may transmit the first signal received from the first external device to a second external device so that the second external device performs the operation for MDC.

According to an embodiment, in the automatic ID setting mode, the electronic device may receive a unique ID of the electronic device included in the first signal received from the first external device.

According to an embodiment, in the LAN master mode, the electronic device may transmit a unique ID of the second external device included in the second signal generated by the processor, to the second external device.

According to an embodiment, in operation 420, the electronic device may select at least one of a first path connecting the first communication connector and the second communication connector, a second path connecting the first communication connector and the processor, and a third path connecting the processor and the second communication connector, based on the identified operating mode of the electronic device.

According to an embodiment, the first path may refer to a path through which the first signal received from the first external device is transmitted to the second external device. The first path may include a path connected from the reception line 211 of the first communication connector 210 through the first switch 232 to the transmission line 223 of the second communication connector 220.

According to an embodiment, the second path may refer to a path through which the first signal received from the first external device is transmitted to the processor. The second path may include a path connected from the reception line 211 of the first communication connector 210 through the second switch 234 to the reception line 241 of the processor 240.

According to an embodiment, the third path may refer to a path through which a signal generated by the processor 240 is transmitted to the second external device. The third path may include a path connected from the transmission line 243 of the processor 240 through the second switch 234 to the transmission line 223 of the second communication connector 220.

According to an embodiment, in case where the operating mode is the daisy chain mode, the electronic device may select the first path and the second path. The electronic device may transmit the first signal to the second external device through the first path, and may transmit the first signal to the processor through the second path.

According to an embodiment, in case where the operating mode is the automatic ID setting mode, the electronic device may select the second path and the third path. In the automatic ID setting mode, the electronic device may transmit a unique identifier of the electronic device included in the first signal received from the first external device, through the second path, to the processor. The electronic device may transmit the second signal generated by the processor to the second external device through the third path.

According to an embodiment, in case where the operating mode is the LAN master mode, the electronic device may select the third path. The electronic device may transmit the second signal generated by the processor to the second external device through the third path.

According to an embodiment, the electronic device may control the first switch and the second switch to transmit, to the second external device, at least one of the first signal received from the first external device and the second signal generated by the processor, through at least one path selected in operation 420.

According to an embodiment, the operating power supply of the processor may transmit a control signal (e.g., the first control signal L and the second control signal H) indicating signals to be output by the first switch and the second switch, through a switch control circuit (not shown). The control signal may be different according to an operating mode of the electronic device.

According to an embodiment, the second switch may be disposed between the first communication connector and the second communication connector of the first path and between the processor and the second communication connector of the third path, and the first switch may be disposed between the processor and the first communication connector of the second path.

According to an embodiment, the first switch and the second switch may be implemented as general purpose input/output (GPIO).

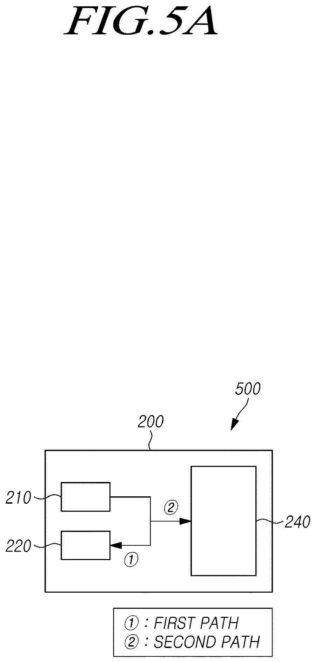

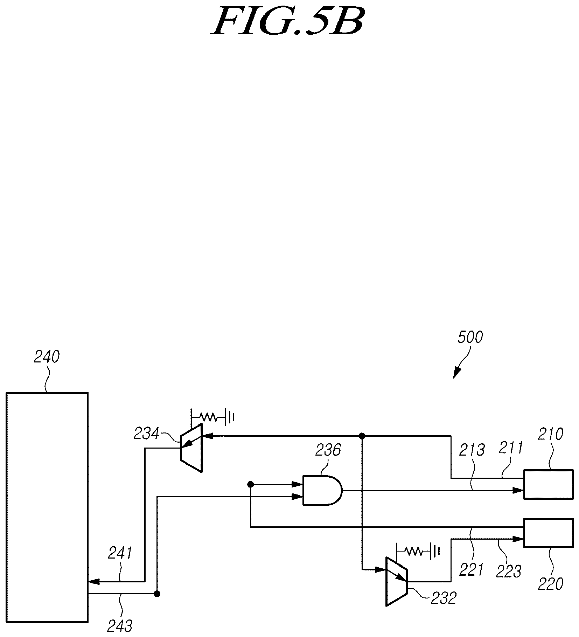

FIG. 5A illustrates a signal flow in a first operating mode of an electronic device according to an embodiment. FIG. 5B illustrates an example of switch control in the first operating mode of an electronic device according to an embodiment. The electronic device illustrated in FIGS. 5A and 5B may correspond to the electronic device 110 and the electronic device 200. The first operating mode may mean a daisy chain mode. Referring to FIGS. 5A and 5B, an internal connection structure 500 may mean an internal connection structure of the electronic device 200 operating in the first operating mode.

According to an embodiment, in the first operating mode, the electronic device 200 may transmit the first signal received from the first external device to the second external device through the first path (1). For example, the electronic device 200 may receive the first signal through the reception line 211 and transmit the same to the transmission line 223 through the first switch 232.

According to an embodiment, in the first operating mode, the electronic device may transmit a first signal received from the first external device to the processor through the second path ②. For example, the electronic device 200 may receive the first signal through the reception line 211 and transmit the same to the reception line 241 through the second switch 234.

According to an embodiment, the processor 240 may transmit the first control signal L to the first switch 232 and the second switch 234, respectively, and accordingly, the first switch 232 and the second switch 234 may select and output the first signal from among one or more input signals.

Referring to FIG. 5B, the first signal received via the reception line 211 through the first communication connector 210 may pass through the first switch 232 and the second switch 234, respectively. The first switch 232 may select and output the first signal, and transmit the same to the second communication connector 220 via the transmission line 223. The second switch 234 may select and output the first signal, and transmit the same to the processor 240 via the reception line 241.

Referring to FIG. 5B, a signal received via the reception line 221 from the second communication connector 220 separately from the first signal and a signal generated by the processor 240 and transmitted via the transmission line 243 may be transmitted via the transmission line 213 to the first communication connection 210 through an AND gate 236. This is a signal transmitted to the first external device or a host device (e.g., the host device 120), and may include a signal having information on the electronic device 200 or information on the second external device.

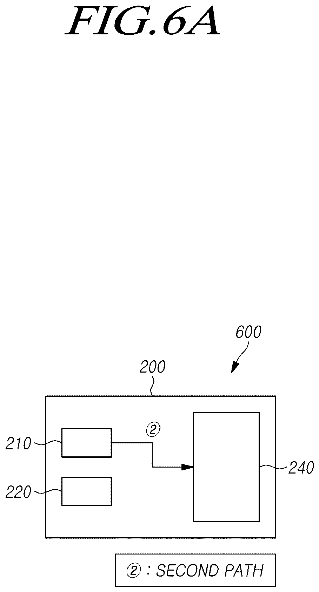

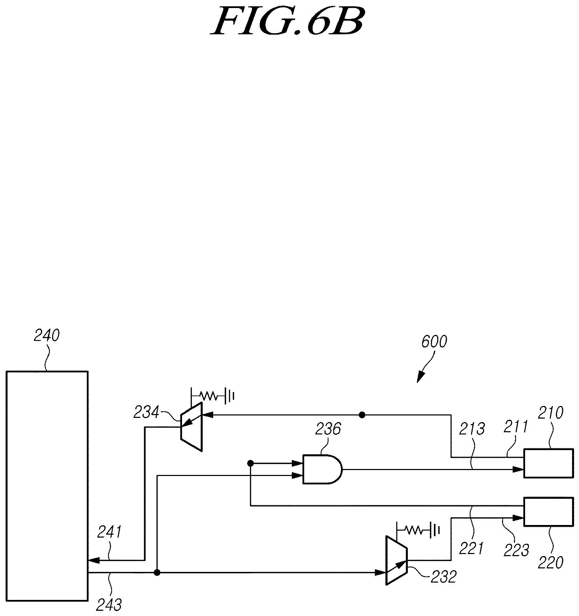

FIG. 6A illustrates a signal flow in a second operating mode of an electronic device according to an embodiment. FIG. 6B illustrates an example of switch control in a second operating mode of an electronic device according to an embodiment. The electronic device illustrated in FIGS. 6A and 6B may be a device corresponding to the electronic device 110 and the electronic device 200. The second operating mode may mean an automatic ID setting mode. Referring to FIGS. 6A and 6B, an internal connection structure 600 may mean an internal connection structure of the electronic device 200 operating in the second operating mode.

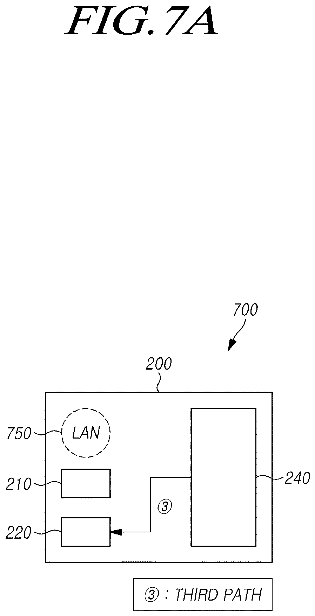

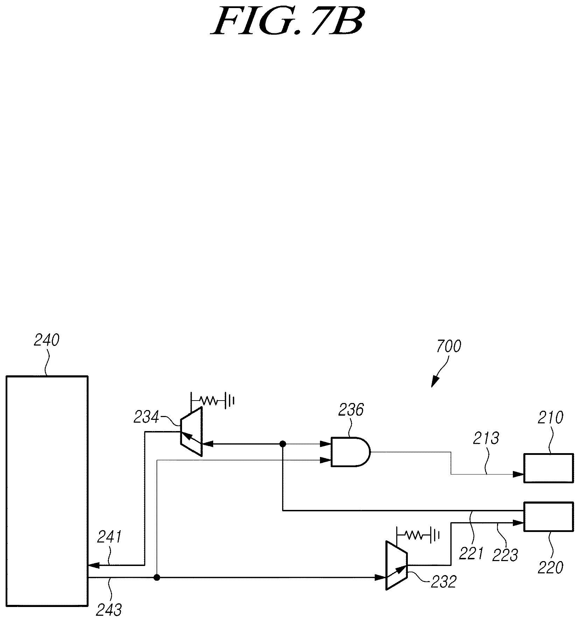

Although not shown in FIG. 6A, even in the second operating mode, the second signal generated by the processor 240 may be transmitted to the second external device via a third path (to be described later in FIG. 7). Although FIG. 6A does not illustrates a flow of the signal transmitted to the second external device in order to explain the operational flow according to the automatic ID setting mode of the electronic device, it does not mean that the second signal is not transmitted to the second external device, and referring to FIG. 6B, the second signal generated by the processor 240 may be transmitted to the second communication connector 220 through the first switch 234.

According to an embodiment, in the second operating mode, the electronic device 200 may transmit the first signal received from the first external device to the processor 240 through the second path ②. For example, the electronic device 200 may receive the first signal through the reception line 211 and transmit the same to the processor 240 through the second switch 234.

According to an embodiment, the processor 240 may transmit the second control signal H to the first switch 232, and transmit the first control signal L to the second switch 234. As such, the first switch 232 may output a second signal from among one or more input signals, and the second switch 234 may select and output a first signal from among one or more input signals.

Referring to FIG. 6B, the first signal received via the reception line 211 through the first communication connector 210 may pass through the second switch 234. The second switch 234 may select and output the first signal from among one or more signals input to the second switch 234, and transmit the same to the processor 240 via the reception line 241.

Referring to FIG. 6B, a signal received via the reception line 221 from the second communication connector 220 and a signal generated by the processor 240 and transmitted via the transmission line 243 may be transmitted through an AND gate 236 to the first communication connector 210 via the transmission line 213. This is a signal transmitted to the first external device or the host device (e.g., the host device 120), and may be a signal including information on the electronic device 200 or information on the second external device.

Referring to FIG. 6B, the second signal generated by the processor 240 and transmitted via the transmission line 243 may pass through the first switch 232 to be transmitted to the second communication connector 220 along the transmission line 223.

FIG. 7A illustrates a signal flow in a third operating mode of an electronic device according to an embodiment. FIG. 7B illustrates an example of switch control in a third operating mode of an electronic device according to an embodiment. The electronic device illustrated in FIGS. 7A and 7B may be a device corresponding to the electronic device 110 and the electronic device 200. The third operating mode may mean the LAN master mode. Referring to FIGS. 7A and 7B, an internal connection structure 700 may mean an internal connection structure of the electronic device 200 operating in the third operating mode.

According to an embodiment, in the third operating mode, the electronic device 200 may transmit the second signal generated by the processor 240 to the second external device via the third path ③. For example, the electronic device 200 may transmit the second signal to the transmission line 223 of the second communication connector 210 through the first switch 232 along the transmission line 243.

FIG. 7A does not illustrate a flow of the signal received from the second external device in order to explain an operation flow according to the LAN master mode, but referring to FIG. 7B, the electronic device 200 may receive a signal from the second external device and transmit the same to the processor 240. For example, the electronic device 200 may receive the signal received through the reception line 221 of the second communication connector, by the processor 240 along the reception line 241 through the first switch.

FIG. 7A does not illustrate a flow of the second signal generated by the processor 240 and transmitted to the first external device in order to explain the operation flow according to the LAN master mode, but referring to FIG. 7B, the electronic device 200 may transmit the second signal generated by the processor 240 to the first communication connector 210 along the transmission line 213 through the transmission line 243 and the AND gate 236.

According to an embodiment, although not shown in the drawing, the electronic device 200 may receive a signal from a LAN terminal 750. The electronic device 200 may transmit the signal received through the LAN terminal 750 to the processor 240. The processor 240 may generate a second signal based on the signal received through the LAN terminal 750. The signal received through the LAN terminal 750 may include information for controlling other external devices connected to the electronic device (e.g., an identifier, screen setting information, sound information, information on operating mode, or the like).

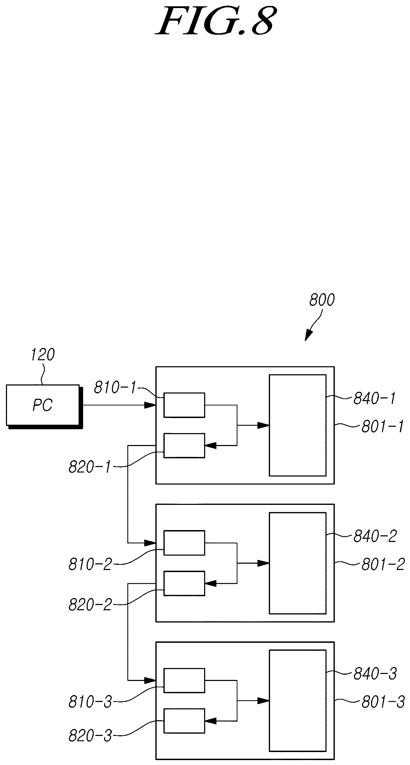

FIG. 8 illustrates an example of a connection between display devices according to an embodiment.

A first display device 801-1, a second display device 801-2, and a third display device 801-3 of FIG. 8 may be a device corresponding to the electronic device 200. The first display device 801-1, the second display device 801-2, and the third display device 801-3 of FIG. 8 may be a device corresponding to the first display device 110-1, the second display device 110-2, and the third display device 110-3, respectively.

A first communication connector 810-1 of the first display device 801-1, a first communication connector 810-2 of the second display device 801-2, and a first communication connector 810-3 of the third display device 801-3 may have a configuration corresponding to the first communication connector 210, respectively.

A second communication connector 820-1 of the first display device 801-1, a second communication connector 820-2 of the second display device 801-2, and a second communication connector 820-3 of the third display device 801-3 may have a configuration corresponding to the second communication connector 220, respectively.

A processor 840-1 of the first display device 801-1, a processor 840-2 of the second display device 801-2, and a processor 840 of the third display device 801-3 may have a configuration corresponding to the processor 840, respectively.

The first operating mode may mean the daisy chain mode. Although FIG. 8 illustrates an example in which one PC device and three display devices are connected together, this is only of an example, and more or fewer than three of display devices may be connected together. Further, a host device other than a PC may be connected together.

Referring to FIG. 8, the first display device 801-1, the second display device 801-2, and the third display device 801-3 may be connected in a daisy chain, and may be configured with an internal connection structure 500, respectively, as illustrated in FIG. 5A.

Referring to FIG. 8, the host device 120 (e.g., PC) may be connected to the first communication connector 810-1 of the first display device 801-1. Signals input from the host device 120 to the first communication connector 810-1 of the first display device 801-1 may be transmitted to the processor 840-1 and the second communication connector 820-1, respectively. The second communication connector 820-1 of the first display device 801-2 may be connected to the first communication connector 810-2 of the second display device 801-2. Signals input from the first display device 801-1 to the first communication connector 810-1 of the second display device 801-2 may be transmitted to the processor 840-2 and the second communication connector 820-2, respectively. The second communication connector 820-2 of the second display device 801-2 may be connected to the first communication connector 810-3 of the third display device 801-3. Signals input from the second display device 801-2 to the first communication connector 810-1 of the third display device 801-3 may be to the processor 840-3 and the second communication connector 820-3, respectively. As described above, in the case of the daisy chain structure in which the host device 120 and a plurality of display devices are sequentially connected, the flow of signals can be controlled so that the signal received from the first connected device is transmitted to the processor of the device, and then also transmitted to the next connected device. Such a control of signal flow may be performed as described above with reference to FIGS. 3 and 4.

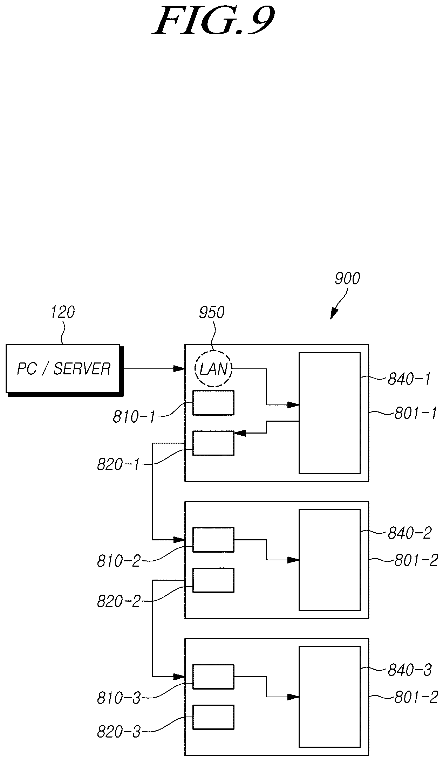

FIG. 9 illustrates an example of a connection between display devices according to an embodiment.

The first display device, the second display device, and the third display device described with reference to FIG. 9 are merely classified according to the order in which they are connected for convenience of description, and all of them may be an electronic device corresponding to the electronic device 110 or the electronic device 200. The first path, the second path, and the third path described in FIG. 9 may refer to paths corresponding to the first path, the second path, and the third path described in FIGS. 5A, 6A, and 7A. FIG. 9 shows three display devices, but this is only of an example, and fewer or more than three display devices may be connected to the PC. Referring to FIG. 9, the host device 120 (e.g., PC/server) may be connected to the first display device 901-1, the first display device 901-1 may be connected to the second display device 901-2), and the second display device 901-2 may be connected to the third display device 901-3.

Referring to FIG. 9, the first display device 801-1 may operate based on a LAN master mode. Irrespective of the signal received from the first communication connector 810-1, such LAN master mode may be used in case where the second display 801-2 and the third display device 801-3 are to be directly controlled based on a signal received from a LAN terminal 950 or a signal generated by the processor 840-1 itself.

According to an embodiment, the host device 120 may be connected to the first display device 801-1 through the LAN terminal 850 of the first display device 801-1. The first display device 801-1 may transmit a signal including information received from the LAN terminal 950 or information generated by the processor 840-1, to the second communication connector 820-1.

According to an embodiment, the information received from the LAN terminal 950 or the information generated by the processor 840-1 may be information independent of information received from the PC, and include information that the first display device 801-1 uses to directly control a slave set (e.g., the second display device 801-2 and the third display device 801-3.

According to an embodiment, the second communication connector 820-1 of the first display device 801-1 may be connected to the first communication connector 810-2 of the second display device 801-2, and the second display device 801-2 may receive a signal including the information received from the LAN terminal 950 or the information generated by the processor 840-1 via the first communication connector 810-2, and may transmit the same to the processor 840-2 via the second path. The processor 840-2 may operate based on the signal including the information received from the LAN terminal 950 or the information generated by the processor 840-1.

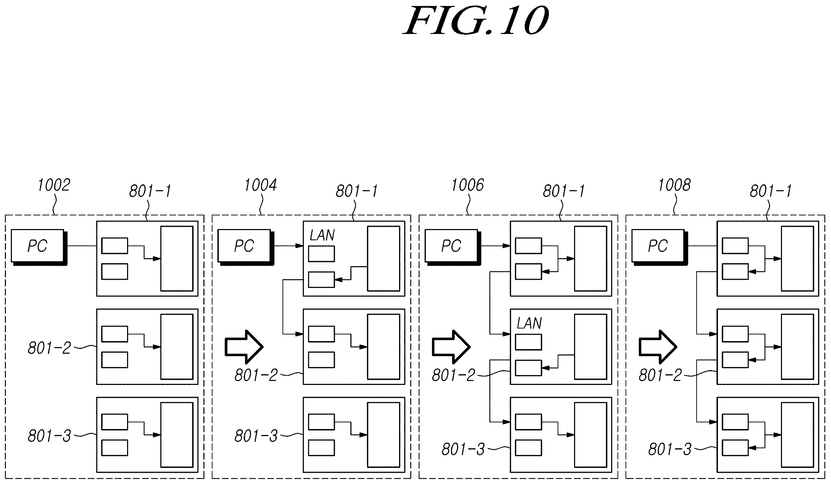

FIG. 10 illustrates an example of a connection between display devices according to an embodiment. Referring to FIG. 10, in the case of performing the automatic ID setting operation, illustrated are a connection structure between display devices and an internal connection structure of each of the display devices.

The first display device, the second display device, and the third display device described with reference to FIG. 10 are merely classified according to the order in which they are connected for convenience of explanation, and all of them may be an electronic device corresponding to the electronic device 110 or the electronic device 200. The first path, the second path, and the third path described in FIG. 10 may refer to paths corresponding to the first path, the second path, and the third path described with reference to FIGS. 5A, 6A, and 7A. Although FIG. 10 shows three display devices, this is only of an example and fewer or more than three display devices may be connected to the PC.

According to an embodiment, the connection structure may change in the order of a first external connection structure 1002, a second external connection structure 1004, a third external connection structure 1006, and a fourth external connection structure 1008.

According to an embodiment, the first connection structure 1002 may relate to a process in which the first display device 801-1 receives a signal from a PC to set an identifier; the second connection structure 1004 may relate to a process in which the second display device 801-2 receives a signal from the first display device 801-1 to set an identifier; the third external connection structure 1006 may relate to a process in which the third display device 801-3 receives a signal from the second display device 801-2 to set an identifier; and the fourth external connection structure 1008 may relate to a process in which after completing the identifier setting for the first display device 801-1, the second display device 801-2, and the third display device ( 801-3), it operated in a first operating mode (e.g., daisy chain mode).

According to an embodiment, in the first external connection structure 1002, the first display device 801-1, the second display device 801-2, and the third display device 801-3 may operate in a second operating mode (e.g., ID automatic setting mode) based on the internal connection structure 600. For example, the first display device 1002-1 may receive a signal including information related to the identifier of the first display device 801-1 from a PC, and the first display device 801-1 may transmit the information related to the identifier of the first display device 801-1 to the processor 840-1 of the first display device 801-1 through the first path. The processor 840-1 may set (e.g., set to "1") its own identifier based on the received information.

According to an embodiment, in the second external connection structure 1004, the first display device 801-1 may operate in a LAN master mode based on the internal connection structure 700, and the second display device 801-2 and the third display device 801-3 may operate in the automatic ID setting mode based on the internal connection structure 600.

According to an embodiment, in the second external connection structure 1004, the first display device 801-1 may operate in a third operating mode (e.g., LAN master mode) after completing the identifier setting. For example, the first display device 801-1 may change the operating mode from the second operating mode to the third operating mode after completing the identifier setting. Thereafter, the first display device 801-1 may transmit a signal including information related to the identifier of the second display device 801-2 to the second display device 801-2.

According to an embodiment, in the second external connection structure 1004, the second display device 801-2 may receive information related to an identifier of the second display device 801-2 from the first display device 801-1. For example, the second display device 801-2 may receive a signal including the information related to the identifier of the second display device 801-2 and transmit the signal to the processor 840-2 through the first path. The processor 840-2 may set (e.g., set to "2") the identifier of the second display device 801-2 based on the received information.

According to an embodiment, although not shown in the drawing, in the second external connection structure 1004, a LAN (e.g., 750) of the first display device 801-1 and the processor 840-1 may be connected to each other, and the processor 840-1 may receive the information related to the identifier directly from the LAN, based on which it may transmit the information related to the identifier of the second display device 801-2 to the second display device 801-2.

According to an embodiment, in the third external connection structure 1006, the first display device 801-1 may operate in the daisy chain mode based on the internal connection structure 500, the second display device 801-2 may operate in the LAN master mode based on the internal connection structure 700, and the third display device 801-3 may operate in the automatic ID setting mode based on the internal connection structure 600.

According to an embodiment, in the third external connection structure 1006, the first display device 801-1 may transmit to the second display device 801-2 the signal including the information related to the identifier of the second display device 801-2, and then switch the operating mode from the LAN master mode to the daisy chain mode. Thereafter, the first display device 801-1 may operate in the daisy chain mode, and may transmit a signal received from the PC to the processor 840-1 through the first path and transmit the same to the second display device 801-2 through the second path.

According to an embodiment, in the third external connection structure 1006, the second display device 801-2 may switch the operating mode from the automatic ID setting mode to the LAN master mode. Thereafter, the second display device 801-2 may transmit a signal including information related to the identifier of the third display device 801-3 to the third display device 801-3. For example, the second display device 801-2 may generate the signal including information related to the identifier of the second display device 801-2 in the processor 840-2 and transmit the signal to the third display device 801-3 through the second path.

According to an embodiment, in the third external connection structure 1006, the third display device 801-3 may operate in the automatic ID setting mode. For example, it may receive the signal including information related to the identifier of the third display device 801-3 from the second display device 801-2, which signal may be transmitted to by the processor 840-3 through the second path. The processor 840-3 may set (e.g., set to "3") the identifier of the third display device 801-3 based on the received information.

According to an embodiment, although not shown in the drawing, in the third external connection structure, a LAN (e.g., 750) of the second display device 801-2 1006 and the processor 840-2 may be connected to each other, and the processor 840-2 may receive information related to the identifier directly from the LAN, based on which it may transmit the signal including the information related to the identifier of the third display device 801-3 to the third display device 801-3.

According to an embodiment, in the fourth external connection structure 1008, the first display device 801-1, the second display device 801-2, and the third display device 801-3 may all operate in the daisy chain mode based on the internal connection structure 500. In the fourth external connection structure 1008, the operations of the first display device 801-1, the second display device 801-2, and the third display device 801-3 may correspond to the operation shown in FIG. 8.

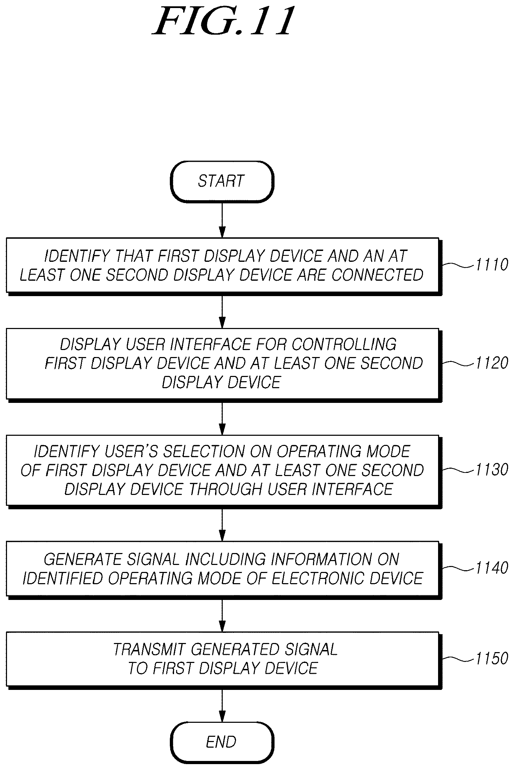

FIG. 11 illustrates an operational flow of an electronic device according to an embodiment. The electronic device of FIG. 11 may correspond to the host device 120 of FIG. 1, the host device of FIGS. 8, 9 and 10, a PC, and a server device. The first display device of FIG. 11 may refer to a display device (e.g., the first display device 801-1) (such as e.g., a master device) directly connected to the electronic device amongst a plurality of display devices connected to the electronic device. The second display device of FIG. 11 may refer to a remaining device (e.g., a slave device) other than the first display device amongst the plurality of display devices connected to the electronic device.

According to an embodiment, in operation 1110, the electronic device may identify that the first display device and an at least one second display device are connected. The electronic device may identify that the first display device and the at least one second display device are connected, based on information related to a connection state of the first display device received from the first display device and information related to a connection state of the at least one second display device.

According to an embodiment, the information related to the connection state of the first display device may be generated by the processor of the first display device and transmitted to the electronic device through the first communication connector of the first display device (e.g., in FIG. 3, being generated in the processor 240 and passing through the AND GATE 236 via the transmission line 243 and then transmitted to the first communication connector 210 via the transmission line 213).

According to an embodiment, the information related to the connection state of the at least one second display device may be received from the at least one second display device in the first display device (e.g., received through the second communication connector 220 via the reception line 221 in FIG. 3) and then transmitted to the electronic device (e.g., in FIG. 3, being transmitted from the AND gate 236 to the first communication connector 210 via the transmission line 213).

According to an embodiment, the electronic device, the first display device, and the at least one second display device may be sequentially connected as shown in FIG. 1.

According to an embodiment, in operation 1120, the electronic device may display a user interface (e.g., user interface 1200) for controlling the first display device and the at least one second display device.

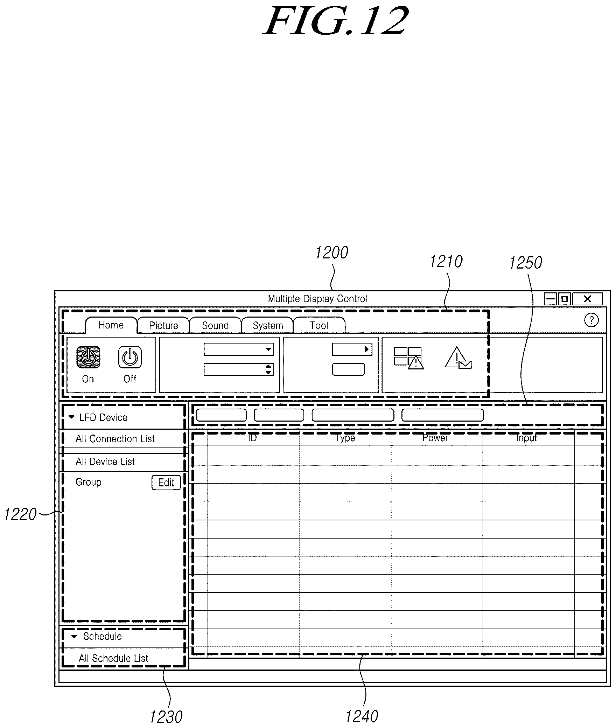

According to an embodiment, the user interface may include a plurality of areas for performing functions of a plurality of display systems. For example, the user interface may include a menu area (e.g., a first area 1210 of FIG. 12) for setting the state of the first display device and the at least one second display device connected to the electronic device, and the program environment (e.g., screen setting, sound setting, display type such as video wall, multi-monitor, or the like). Further, for example, the user interface may include an area (e.g., a second area 1220 of FIG. 12) for displaying a list of the first display device and the at least one second display device connected to the electronic device, and their groups. Further, for example, the user interface may include an area (e.g., a third area 1230) for displaying a scheduling list of the first display device and the at least one second display device connected to the electronic device. Further, for example, the user interface may include an area (e.g., a fourth area 1240) for selecting a display to be adjusted amongst the first display device and the at least one second display device connected to the electronic device. Further, for example, the user interface may include an area (e.g., a fifth area 1250) for displaying a list of other display devices to be added, removed and grouped, in addition to the first display device and the at least one second display device connected to the electronic device.

According to an embodiment, in operation 1130, the electronic device may identify the operating mode of the first display device and the at least one second display device based on the user's selection through the user interface.

According to an embodiment, when the electronic device identifies the user's selection in the area for performing the automatic ID setting function in the user interface, the operating mode of the first display device may be identified as the automatic ID setting mode or the LAN master mode, and the operating mode of the at least one second display device may be identified as the LAN master mode or the automatic ID setting mode.

According to an embodiment, when the electronic device identifies the user's selection in an area (e.g., the first area 1210, the second area 1220, the third area 1230, the fourth area 1240, and the fifth area 1250) for performing the general functions of the first display device and the at least one second display device, through the user interface, it may identify the operating mode of the first display device and the at least one second display device as the daisy chain mode.

According to an embodiment, although not shown in the drawings, the electronic device may determine the basic operating mode of the electronic device as the daisy chain mode.

According to an embodiment, in operation 1140, the electronic device may generate a signal including information on the identified operating mode of the electronic device.

According to an embodiment, when the operating mode is identified as the daisy chain mode, the electronic device may generate a signal including information (e.g., L, L) for the control of the first switch (e.g., the first switch 232) and the second switch (e.g., the second switch 234).

According to an embodiment, when the operating mode is identified as the automatic ID setting mode, the electronic device may generate a signal including information (e.g., H, L) for the control of the first switch (e.g., first switch 232) and a second switch (e.g., second switch 234).

According to an embodiment, when the operating mode is identified as the LAN master mode, the electronic device may generate a signal including information (e.g., H, H) for the control of the first switch (e.g., the first switch 232) and the second switch (e.g., the second switch 234).

According to an embodiment, in operation 1150, the electronic device may transmit the generated signal to the first display device.

According to an embodiment, the electronic device may transmit the generated signal to the first communication connector unit of the first display device. Alternatively, the electronic device may transmit the generated signal to the first display device through a circuit (not shown) configured separately for transmission and reception of the control signal.

FIG. 12 illustrates an example of a user interface displayed on an electronic device according to an embodiment of the present disclosure.

Referring to FIG. 12, the user interface 1200 may include a plurality of areas for performing the functions of a plurality of display systems.

According to an embodiment, the user interface 1200 may include a menu area (e.g., the first area 1210 of FIG. 12) for setting the state of the first display device and the at least one second display device connected to the electronic device, and the program environment (e.g., screen setting, sound setting, display type such as video wall, multi-monitor, or the like).

According to an embodiment, the user interface 1200 may include an area (e.g., the second area 1220 of FIG. 12) for displaying a list of the first display device and the at least one second display device connected to the electronic device, and their groups.

According to an embodiment, the user interface 1200 may include an area (e.g., the third area 1230) for displaying a scheduling list of the first display device and the at least one second display device connected to the electronic device.

According to an embodiment, the user interface 1200 may include an area (e.g., the fourth area 1240) for selecting a display to be adjusted amongst the first display device and the at least one second display device connected to the electronic device.

According to an embodiment, the user interface 1200 may include an area (e.g., the fifth area 1250) for displaying a list of other display devices to be added, removed and grouped, in addition to the first display device and the at least one second display device connected to the electronic device.

According to an embodiment, although not shown in the drawing, the user interface 1200 may include an object for executing an automatic ID setting operation.

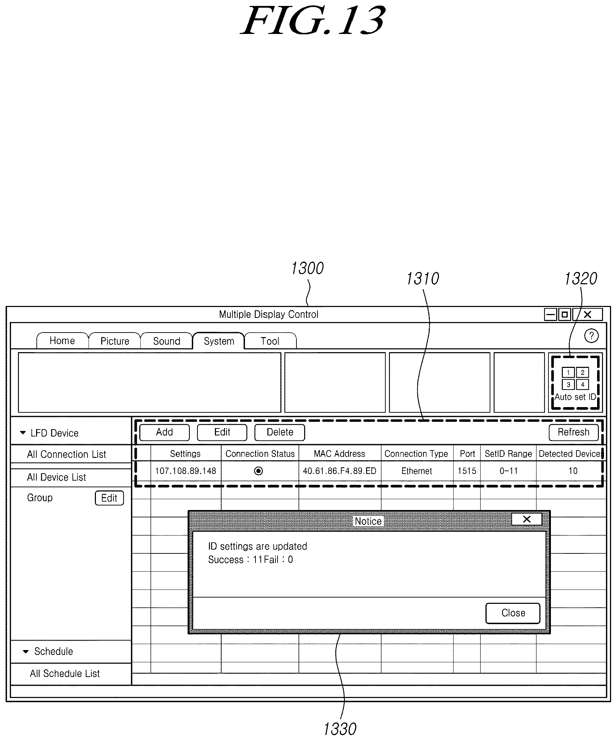

FIG. 13 illustrates an example of a user interface displayed on an electronic device according to an embodiment.

Referring to FIG. 13, the user interface 1300 may include an area 1310 for displaying information about connected display devices, an area 1320 for executing an automatic ID setting operation, and an area 1330 indicating whether the automatic ID setting has been successfully performed.

According to an embodiment, when the user's selection is identified through the area 1320, the electronic device may transmit a signal for performing the automatic ID setting operation to the first display device. Accordingly, it is possible for the operation as shown in FIG. 10 to be performed.

According to an embodiment, the area 1330 for displaying whether the automatic ID setting has been successfully performed may display information indicating that the ID setting has been updated, information on the number of devices for which the ID update was successful (e.g., Success: 11), and/or information on the number of devices for which ID update failed (e.g., Fail: 0).

According to an embodiment of the present disclosure, an electronic device may include a first communication connector connectable to a first external device, a second communication connector connectable to a second external device, a processor, and a control circuit electrically connected to the processor, the first communication connector, and the second communication connector, the control circuit including a first path connecting the first communication connector and the second communication connector, a second path connecting the first communication connector and the processor, and a third path connecting the processor and the second communication connector, wherein the processor is configured to identify an operating mode of the electronic device, and based on the identified operating mode of the electronic device, select at least one of the first path, the second path, and the third path.

According to an embodiment of the present disclosure, the control circuit may further include: a first switch disposed between the processor and the first communication connector in the second path, and a second switch disposed between the first communication connector and the second communication connector in the first path and between the processor and the second communication connector in the third path, and the processor is further configured to, while the first external device is connected to the first communication connector and the second external device is connected to the second communication connector, control the first switch and the second switch to transmit, to the second external device, at least one of a first signal received from the first external device and a second signal generated by the processor, through the selected at least one path.

According to an embodiment of the present disclosure, the processor may be configured to, while the first external device is connected to the first communication connector, identify an operating mode of the electronic device based on a control signal received from the first external device through the first communication connector.

According to an embodiment of the present disclosure, the processor may be configured to control to receive the control signal generated based on a user input identified by a host device through the first communication connector.

According to an embodiment of the present disclosure, when an operating mode of the electronic device is a first operating mode, the processor may be configured to control to select the first path and the second path.

According to an embodiment of the present disclosure, when an operating mode of the electronic device is a second operating mode, the processor may be configured to control to select the second path and the third path.

According to an embodiment of the present disclosure, the electronic device may further include a memory, wherein the processor may be configured to store identifier information of the electronic device included in the first signal, in the memory.

According to an embodiment of the present disclosure, when an operating mode of the electronic device is a third operating mode, the processor may be configured to control to select the third path.

According to an embodiment of the present disclosure, the first communication connector and the second communication connector may be of a universal asynchronous receiver/transmitter (UART), and the first switch and the second switch may be of a general purpose input/output (GPIO).

According to an embodiment of the present disclosure, an operating method of an electronic device may include, by the electronic device, receiving information on an operating mode of the electronic device from a first external device, identifying the operating mode of the electronic device based on the information on the operating mode, and based on the identified operating mode, transmitting to a second external device at least one of a first signal received from the first external device and a second signal generated by the electronic device.

According to an embodiment of the present disclosure, the operating method may further include, by the electronic device: when the operating mode is a first operating mode, transmitting the first signal to the second external device through a first path connecting a first communication connector of the electronic device and a second communication connector of the electronic device; and receiving the first signal through a second path connecting the first communication connector of the electronic device and a processor of the electronic device.

According to an embodiment of the present disclosure, the operating method may further include, by the electronic device, when the operating mode is a second operating mode, receiving the first signal through a second path connecting a first communication connector of the electronic device and a processor of the electronic device; and transmitting the second signal to the second external device through a third path connecting the processor of the electronic device and a second communication connector of the electronic device.

According to an embodiment of the present disclosure, the operating method may further include, by the electronic device, determining an identifier of the electronic device based on information about the identifier of the electronic device included in the first signal; and storing the determined identifier.

According to an embodiment of the present disclosure, the operating method may further include, by the electronic device, when the operating mode is a third operating mode, transmitting the second signal to the second external device through a third path connecting a processor of the electronic device and a second communication connector of the electronic device.

According to an embodiment of the present disclosure, an electronic device may include a transceiver, a display, a processor and a memory storing instructions to cause the processor to identify that a first display device and at least one second display device are connected to the electronic device, display a user interface on the display to control the first display device and the at least one second display device, identify an operating mode of the first display device and an operating mode of the at least one second display device, based on a user's selection through the user interface, generate a signal including information on the identified operating mode of the first display device and the identified operating mode of the at least one second display device, and transmit the generated signal to the first display device via the transceiver.

According to an embodiment of the present disclosure, the user interface may include at least one of an area for displaying information on states of the first display device and the at least one second display device, an area for displaying information on screen settings, an area for displaying information on sound settings, an area for displaying information about a connection state, and an area for displaying identification information.

According to an embodiment of the present disclosure, the information about the identified operating mode of the first display device and the identified operating mode of the at least one second display device may include control information for controlling at least one switch included in the first display device and at least one switch included the at least one second display device.

According to an embodiment of the present disclosure, the information about the identified operating mode of the first display device and the identified operating mode of the at least one second display device may include at least one of a daisy chain mode, an automatic ID setting mode, and a LAN master mode.

According to an embodiment of the present disclosure, the user interface may include an object for performing an automatic ID setting function.

According to an embodiment of the present disclosure, the transceiver may include a universal asynchronous receiver/transmitter (UART).

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

The various embodiments and terms used herein are not intended to limit the technical features described herein to specific embodiments and should be understood to include various modifications, equivalents, or substitutes of the embodiment. For example, an element expressed in a singular form should be understood as including a plurality of elements unless the context clearly dictates only a singular form. It should be appreciated that the term 'and/or' used herein encompasses any and all possible combinations of one or more of the listed items. The terms such as "comprise", "have", and "consist of" used in the disclosure are only intended to designate that there are features, components, parts, or a combination thereof described in the disclosure, and are not intended to exclude a possibility of the presence or addition of one or more other features, components, parts, or a combination thereof, by using these terms. In this document, each of the phrases such as "A or B", "at least one of A and B", "at least one of A or B", "A, B or C", "at least one of A, B and C", and "at least one of A, B, or C" may include any one of the items enumerated together in a corresponding one of the phrases, or all possible combinations thereof. Terms such as "the first", "the second", or "first", or "second" may be used simply to distinguish a corresponding component from another corresponding component, and do not limit the corresponding components in view of other aspect (e.g., importance or order).

The terms such as e.g., "module" or "unit" used in various embodiments of the present document may include a unit implemented in hardware, software, or firmware and be used interchangeably with terms such as e.g., logic, logic block, part, component, or circuitry, for example. The module or unit may be a minimum unit or a part of the integrally configured component or the component that performs one or more functions. For example, according to an embodiment, the module or unit may be implemented in the form of an application-specific integrated circuit (ASIC).

The term "in case ~" used in various embodiments of the disclosure may be interpreted to mean "when to ~", "when it is -", "in response to determining ~", or "in response to detecting -", depending on the context. Similarly, the expressions such as e.g., "when it is determined to be ~" or "when it is detected to be ~" may be interpreted to mean "when determining ~", "in response to determining ~", "when detecting ~" or "in response to detecting -", depending on the context.

The program executed by the electronic device 200 described herein may be implemented as a hardware component, a software component, and/or a combination of the hardware component and the software component. The program may be performed by any system capable of executing computer-readable instructions.

The software may include computer programs, codes, instructions, or a combination of one or more of these, and may configure a processing unit to operate as desired or command the processing unit either independently or collectively. The software may be implemented as a computer program including instructions stored in a computer-readable storage medium. The computer-readable recording medium may include, for example, a magnetic storage medium (e.g., floppy disk, hard disk, etc.), a solid-state storage medium (e.g., read-only memory (ROM), random-access memory (RAM)), an optical-readable storage medium (e.g., CD-ROM, Digital Versatile Disc (DVD)) or the like. The computer program may be distributed (e.g., downloaded or uploaded) by online via an application store (e.g., PlayStore^{™}), or between two user devices (e.g., smartphones) directly. In the case of online distribution, at least part of the computer program product may be at least temporarily stored or temporarily created in a storage medium that can be read by an apparatus such as e.g., a manufacturer's server, an application store server, or a relay server memory.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first communication connector connectable to a first external device;
a second communication connector connectable to a second external device;
a processor; and
a control circuit electrically connected to the processor, the first communication connector, and the second communication connector, the control circuit including a first path connecting the first communication connector and the second communication connector, a second path connecting the first communication connector and the processor, and a third path connecting the processor and the second communication connector,
wherein the processor is configured to:
identify an operating mode of the electronic device, and
based on the identified operating mode of the electronic device, select at least one of the first path, the second path, and the third path.

2. The electronic device of claim 1, wherein
the control circuit further includes:
a first switch disposed between the processor and the first communication connector in the second path, and
a second switch disposed between the first communication connector and the second communication connector in the first path and between the processor and the second communication connector in the third path, and
the processor is further configured to, while the first external device is connected to the first communication connector and the second external device is connected to the second communication connector, control the first switch and the second switch to transmit, to the second external device, at least one of a first signal received from the first external device and a second signal generated by the processor, through the selected at least one path.

3. The electronic device of claim 2, wherein the processor is configured to, while the first external device is connected to the first communication connector, identify an operating mode of the electronic device based on a control signal received from the first external device through the first communication connector.

4. The electronic device of claim 3, wherein the processor is configured to control to receive the control signal generated based on a user input identified by a host device through the first communication connector.

5. The electronic device of claim 2, wherein when an operating mode of the electronic device is a first operating mode, the processor is configured to control to select the first path and the second path.

6. The electronic device of claim 2, wherein when an operating mode of the electronic device is a second operating mode, the processor is configured to control to select the second path and the third path.

7. The electronic device of claim 6, further comprising:
a memory,
wherein the processor is configured to store identifier information of the electronic device included in the first signal, in the memory.

8. The electronic device of claim 2, wherein when an operating mode of the electronic device is a third operating mode, the processor is configured to control to select the third path.

9. The electronic device of claim 2, wherein
the first communication connector and the second communication connector are of a universal asynchronous receiver/transmitter (UART), and
the first switch and the second switch are of a general purpose input/output (GPIO).

10. An operating method of an electronic device, comprising:
receiving information on an operating mode of the electronic device from a first external device;
identifying the operating mode of the electronic device based on the information on the operating mode; and
based on the identified operating mode, transmitting to a second external device at least one of a first signal received from the first external device and a second signal generated by the electronic device.

11. The operating method of claim 10, further comprising:
when the operating mode is a first operating mode,
transmitting the first signal to the second external device through a first path connecting a first communication connector of the electronic device and a second communication connector of the electronic device; and
receiving the first signal through a second path connecting the first communication connector of the electronic device and a processor of the electronic device.

12. The operating method of claim 10, further comprising:
when the operating mode is a second operating mode,
receiving the first signal through a second path connecting a first communication connector of the electronic device and a processor of the electronic device; and
transmitting the second signal to the second external device through a third path connecting the processor of the electronic device and a second communication connector of the electronic device.

13. The operating method of claim 12, further comprising:
determining an identifier of the electronic device based on information about the identifier of the electronic device included in the first signal; and
storing the determined identifier.

14. The operating method of claim 10, further comprising:
when the operating mode is a third operating mode,
transmitting the second signal to the second external device through a third path connecting a processor of the electronic device and a second communication connector of the electronic device.

15. An electronic device comprising:
a transceiver;
a display;
a processor; and
a memory storing instructions to cause the processor to:
identify that a first display device and at least one second display device are connected to the electronic device;
display a user interface to control the first display device and the at least one second display device through the display;
identify an operating mode of the first display device and an operating mode of the at least one second display device, based on a user's selection through the user interface;
generate a signal including information on the identified operating mode of the first display device and the identified operating mode of the at least one second display device; and
transmit the generated signal to the first display device via the transceiver.
